**Europäisches Patentamt**

**European Patent Office**

**Office européen des brevets**

(19)

(11) Veröffentlichungsnummer: **0 086 261**
**A1**

(12) # EUROPÄISCHE PATENTANMELDUNG

(21) Anmeldenummer: **82110461.9**

(22) Anmeldetag: **12.11.82**

(51) Int. Cl.³: **B 01 J 8/26,** B 01 J 8/32,
F 01 K 23/06, F 02 C 3/28

(30) Priorität: **11.02.82 DE 3204672**

(43) Veröffentlichungstag der Anmeldung: **24.08.83**
**Patentblatt 83/34**

(84) Benannte Vertragsstaaten: **AT BE CH DE FR GB IT LI LU NL SE**

(71) Anmelder: **Deutsche Babcock Aktiengesellschaft, Duisburger Strasse 375, D-4200 Oberhausen 1 (DE)**

(72) Erfinder: **Thomas, Lothar, Schoenwasserstrasse 109, D-4150 Krefeld (DE)**

(74) Vertreter: **Müller, Jürgen, Dipl.-Ing., Deutsche Babcock AG Lizenz- und Patentabteilung Duisburger Strasse 375, D-4200 Oberhausen 1 (DE)**

(54) **Kombinierter Gas-/Dampfturbinenprozess.**

(57) Ein kombinierter Gas-/Dampfturbinenprozeß umfaßt eine aufgeladene Wirbelschichtfeuerung mit einem durch Wasser bzw. Dampf oder Luft gekühlten Wirbelbett(1), einen Dampferzeuger mit angeschlossener Dampfturbine und eine vom Rauchgas der Wirbelschichtfeuerung beaufschlagte Gasturbine (6). Der Prozeß wird so geführt, daß parallel zu der Wirbelschichtfeuerung ein Kohlevergaser (2) betrieben wird. Dabei wird komprimierte Luft in dem Wirbelbett der Wirbelschichtfeuerung indirekt erhitzt und ein Teil dieser so erhitzten, komprimierten Luft durch den Kohlevergaser geführt, während der andere Teil einer der Gasturbine vorgeschalteten Brennkammer (5) zugeleitet wird. Das gereinigte Produktgas des Kohlevergasers dient als Brennstoff und wird ebenso wie das Rauchgas der Wirbelschichtfeuerung der Brennkammer zugeführt.

0086261

Kombinierter Gas-/Dampfturbinenprozeß

Die Erfindung betrifft einen kombinierten Gas-/Dampfturbinenprozeß gemäß dem Oberbegriff des Patentanspruches 1.

Der Erfindung liegt die Aufgabe zugrunde, den Wirkungsgrad dieses Gas-/Dampfturbinenprozesses zu erhöhen.

Diese Aufgabe wird durch die Merkmale des Kennzeichnenden Teiles des Patentanspruches 1 gelöst.

Bei dem erfindungsgemäßen Gas-/Dampfturbinenprozeß
ist davon ausgegangen, daß die Wirbelbettemperatur
und damit die der Gasturbine zur Verfügung zu stellende
Heißgastemperatur einen Wert von 850 bis $900^{\circ}$ C nicht
überschreiten soll. Bei einer höheren Temperatur läuft
der Prozeß der Bindung des Schwefels aus der Kohle an
Kalk nicht mehr ab. Ebenso muß die Temperatur des Wirbelbettes unterhalb der Erweichungstemperatur der Asche
gehalten werden, um Verschlackungen und Verschmutzungen
zu unterdrücken. Eine Erhöhung der Gasturbinen-Eintrittstemperatur zur Erhöhung des Wirkungsgrades wird
durch eine Nachverbrennung in der der Gasturbine vorgeschalteten Brennkammer erreicht. Zur Erzielung dieser
Temperaturerhöhung ist kein zusätzlicher Brennstoff
erforderlich, da nach der Erfindung der gleiche Brennstoff verwendet werden kann, der auch für die Erzeugung
des Heißgases in der Wirbelschichtfeuerung eingesetzt
wird. Damit entfällt eine zweite Brennstoffbevorratung
und eine zweite Brennstoffquelle. Die Erwärmung der
dem Vergaser und der Brennkammer zugeführten Luft erfolgt
indirekt in Wärmetauscherrohren innerhalb der Wirbelschichtfeuerung. Damit kann im Vergleich zu einer direkt in der Wirbelschichtfeuerung erfolgten Aufheizung der Luft die Geschwindigkeit in dem Wirbelbett gering gehalten werden und die Grundfläche des Wirbelbettes klein bleiben. Außer-dem braucht die aus dem Wirbelbett austretende Luft nicht mehr entstaubt zu werden.

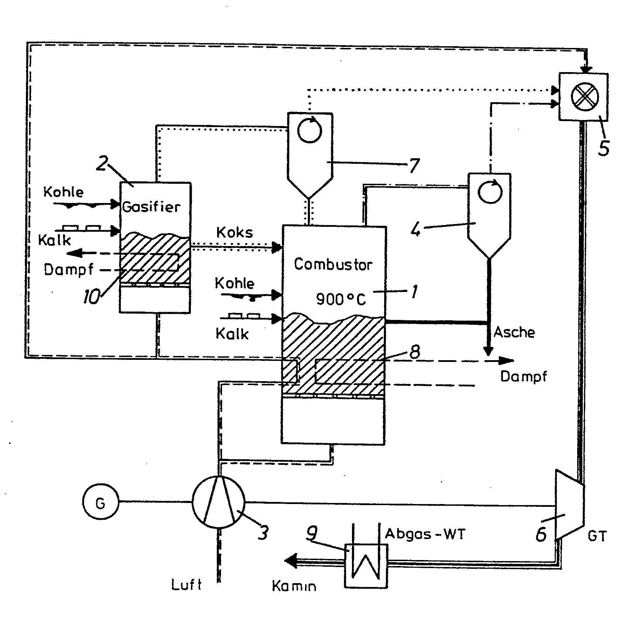

Ein Ausführungsbeispiel der Erfindung ist in der Zeichnung dargestellt und wird im folgenden näher erläutert. Die Zeichnung gibt das Flußbild eines kombinierten Gas-/Dampfturbinenprozesses gemäß der Erfindung wieder.

Die Anlage besteht aus einer druckaufgeladenen Wirbelschichtfeuerung 1 und einem ebenso unter Druck betriebenen und als Wirbelschichtreaktor ausgebildeten Kohlevergaser 2. Die Wirbelschichtfeuerung 1 und der Kohlevergaser 2 sind innerhalb eines unter Druck stehenden Containments angeordnet, durch das nur die notwendigen Zuführungs- und Abführungsleitungen geführt sind. Die Wirbelschichtfeuerung 1 und der Kohlevergaser 2 werden mit dem gleichen Gemisch aus Kohle und Kalkstein oder Kalk gespeist, das in einer nicht dargestellten außerhalb des Containments angeordneten Vorrichtung gemeinsam aufbereitet wurde.

In einem Verdichter 3 wird Luft komprimiert. Hinter dem Verdichter 3 wird der komprimierte Luftstrom in zwei Teilströme aufgeteilt, von denen der Hauptstrom der Wirbelschichtfeuerung 1 zugeführt wird. Das in der Wirbelschichtfeuerung 1 entstehende Rauchgas wird in einem als Zyklon 4 ausgebildeten Abscheider heiß entstaubt und einer Brennkammer 5 zugeleitet, die einer Gasturbine 6 vorgeschaltet ist.

Der in dem Zyklon 4 anfallende Staub wird mit der Asche aus der Wirbelschichtfeuerung 1 vereinigt und gemeinsam aus dem System abgezogen.

Der andere Teilstrom der hinter dem Verdichter 3 aufgeteilten Luft wird durch Wärmetauscherrohre geführt, die in dem Wirbelbett der Wirbelschichtfeuerung 1 angeordnet sind. In diesen Wärmetauscherrohren wird die komprimierte Luft indirekt erhitzt und anschließend in zwei Teilströme aufgeteilt. Der eine Teilstrom gelangt als Verbrennungsluft in die Brennkammer 5. Der andere Teilstrom wird dem Kohlevergaser 2 zugeführt. Das in dem Kohlevergaser 2 erzeugte Produktgas wird nach dem Austritt aus dem Vergaser 2 in einem als Zyklon 7 ausgebildeten Abscheider heiß gereinigt und danach als Brenngas der Brennkammer 5 zugeführt. In der Brennkammer 5 wird durch die Verbrennung des so erzeugten Brenngases mit der erhitzten komprimierten Luft die Temperatur des in der Wirbelschichtfeuerung 1 erzeugten Rauchgases gesteigert. Dieses Gas wird in der Gasturbine 6 entspannt.

Der in dem Kohlevergaser 2 entstehende Koks wird ebenso wie der aus dem Produktgas in dem Zyklon 7 abgetrennte Flugstaub der Wirbelschichtfeuerung 1 zugeführt. Die in diesem Flugstaub und dem Koks enthaltene Asche wird über das Entaschungssystem der Wirbelschicht 1 abgeführt. Ein besonderes Entaschungssystem für den Kohlevergaser 2 kann damit entfallen.

In dem Wirbelbett der Wirbelschichtfeuerung 1 sind zusätzlich zu den von der Luft durchströmten Wärmetauscherrohren weitere Wärmetauscherrohre 8 verlegt, über die Wärme aus der Wirbelschichtfeuerung 1 abgeführt wird. Diese Wärmetauscherrohre 8 sind von Wasser oder Dampf durchströmt und bilden einen Teil eines Dampferzeugungssystemes, dessen Dampf in einer nicht dargestellten Dampfturbine verarbeitet wird. Zu diesem Dampferzeugungssystem gehört weiterhin ein Abgaswärmetauscher 9, der in der Abgasleitung der Gasturbine 6 angeordnet ist. Dieser Abgaswärmetauscher 9 und die Wärmetauscherrohre 8 der Wirbelschichtfeuerung 1 sind schließlich mit weiteren Heizflächen 10 verbunden, die zur Kühlung in dem Kohlevergaser 2 angeordnet sind.

0086261

PATENTANSPRÜCHE:

=====================================================

1. Kombinierter Gas-/Dampfturbinenprozeß umfassend eine aufgeladene Wirbelschichtfeuerung mit einem durch Wasser bzw. Dampf oder Luft gekühlten Wirbelbett, einen Dampferzeuger mit angeschlossener Dampfturbine und eine vom Rauchgas der Wirbelschichtfeuerung beaufschlagte Gasturbine, dadurch gekennzeichnet , daß parallel zu der Wirbelschichtfeuerung ein Kohlevergaser betrieben wird, daß komprimierte Luft in dem Wirbelbett der Wirbelschichtfeuerung indirekt erhitzt wird, daß ein Teil dieser so erhitzten, komprimierten Luft durch den Kohlevergaser geführt und der andere Teil einer der Gasturbine vorgeschalteten Brennkammer zugeleitet wird und daß das gereinigte Produktgas des Kohlevergasers als Brennstoff sowie das Rauchgas der Wirbelschichtfeuerung der Brennkammer zugeführt werden.

2. Gas-/Dampfturbinenprozeß nach Anspruch 1, dadurch gekennzeichnet , daß der der Wirbelschichtfeuerung und dem Kohlevergaser zuzuführende Brennstoff gemeinsam aufbereitet wird.

3. Gas-/Dampfturbinenprozeß nach Anspruch 1 oder 1 und 2, dadurch gekennzeichnet , daß die Feststoffe aus dem Kohlevergaser heiß der Wirbelschichtfeuerung zugeführt werden und daß die in dem Kohlevergaser anfallende Asche nur aus der Wirbelschichtfeuerung abgezogen wird.

0086261

4. Gas-/Dampfturbinenprozeß nach einem oder mehreren der Ansprüche 1 bis 3, dadurch g e k e n n - z e i c h n e t , daß dem Kohlevergaser durch Kühlflächen Wärme entzogen wird und daß diese Wärme mit der an anderen Stellen des Gas-/Dampfturbinenprozesses gewonnenen Wärme in ein gemeinsames Energieerzeugungssystem eingebunden wird.

0086261

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 546 441 (COAL INDUSTRY) <br> * Seiten 2-7,9,10; Ansprüche 1,2,5,8,11,15,17,18,21,23; Figur 1 * | 1-4 | B 01 J 8/26 <br> B 01 J 8/32 <br> F 01 K 23/06 <br> F 02 C 3/28 |
| | --- | | |
| A | 13th INTERNATIONAL CONGRESS ON COMBUSTION EINGINES, 1979, Wien, AT. <br> M.J. COOKE et al.: "La production de gaz du charbon pour l'alimentation des turbines a gaz, en utilisant les techniques de couche fluidifiée" * Seite 5; Figur 2 * | 1 | |
| | --- | | |
| A | US-A-4 253 300 (WILLYOUNG) <br> * Anspruch 1 * | 1 | |
| | ----- | | |

**RECHERCHIERTE SACHGEBIETE (Int. Cl. 3)**

B 01 J 8/00
F 01 K
F 02 C
F 23 C

Der vorliegende Recherchenbericht wurde für alle Patentansprüche erstellt.

| Recherchenort <br> DEN HAAG | Abschlußdatum der Recherche <br> 18-05-1983 | Prüfer <br> ATTASIO R.M. |
|---|---|---|